# EUROPÄISCHE PATENTSCHRIFT

(11) **EP 1 050 090 B1**
(45) Veröffentlichungstag und Bekanntmachung des Hinweises auf die Patenterteilung: **14.10.2009**
(21) Anmeldenummer: 98966348.9
(22) Anmeldetag: 16.12.1998
(51) Int. Cl.: H02B 1/30, H01R 4/64

(54) **VERBINDUNGSELEMENT**
CONNECTING ELEMENT
ELEMENT D'ASSEMBLAGE

(30) Priorität: 19.01.1998 DE 19801720
(43) Veröffentlichungstag der Anmeldung: 08.11.2000
(73) Patentinhaber: Rittal-Werk Rudolf Loh GmbH & Co. KG, 35745 Herborn (DE)
(72) Erfinder: REUTER, Wolfgang, D-57299 Burbach (DE)
(74) Vertreter: Fleck, Hermann-Josef
(86) Internationale Anmeldenummer: PCT/EP1998/008256
(87) Internationale Veröffentlichungsnummer: WO 1999/037003

(56) Entgegenhaltungen:
- DE-U- 29 618 625

## Beschreibung

Die Erfindung betrifft ein Verbindungselement mit einem Halter zur Befestigung von Seitenwänden eines Schaltschrankes an Rahmenprofilen eines Schaltschrank-Rahmengestelles, wobei zur elektrischen Verbindung der Seitenwände mit den Rahmenschenkeln Kontaktfedern an dem Halter befestigt sind, die mit in Richtung zur Seitenwand weisenden Kontaktspitzen versehen sind, wobei die Kontaktspitzen über eine Anlagefläche des Rahmenprofiles, an der die jeweilige Seitewand anliegt, vorstehen.

Ein solches Verbindungselement ist beispielsweise aus der DE 19 525 851 C1 1 bekannt. Dieses Verbindungselement wird in einem außenliegenden Abkantungsbereich des Rahmenprofiles geklemmt gehalten. Das Verbindungselement trägt eine Kontaktfeder die mit Kontaktspitzen versehen ist, wobei die Kontaktspitzen in Richtung auf eine Seitenwand weisen. Dabei sind die Kontaktspitzen so an der Kontaktfeder abgebogen, daß sie über einem Dichtsteg des Rahmenprofiles gehalten sind. Zum Befestigen der Seitenwand ist das Verbindungselement mit einer Gewindeaufnahme versehen, an der die Seitenwand angeschraubt werden kann. Beim Anziehen der hierzu verwendeten Befestigungsschraube wird die Seitenwand gegen den Dichtsteg verspannt. Dabei graben sich die Kontaktspitzen in die Lackierung der Seitenwand ein und stellen einen elektrischen Kontakt her. Bei angeschraubter Seitenwand sind die Kontaktspitzen zwischen der Seitenwand und dem Dichtsteg geklemmt gehalten.

Es ist Aufgabe der Erfindung, ein Verbindungselement der eingangs erwähnten Art zu schaffen, das einfach zu fertigen ist und eine sichere Kontaktgabe gewährleistet.

Diese Aufgabe wird dadurch gelöst, daß der Halter eine Befestigungsplatte aufweist, die an einer Außenwand des Rahmenprofiles angeschraubt ist, daß die Befestigungsplatte in einen, vertikal zur Seitenwand stehenden Befestigungsabschnitt übergeht, an den ein verlaufender Schenkel parallel zur Seitenwand angeschlossen ist, der mit wenigstens einer Gewindeaufnahme zur Festlegung der Seitenwand ausgestattet ist, daß der Schenkel zwei Steckaufnahmen aufweist, die zueinander in Längsrichtung des Rahmenprofiles beabstandet angeordnet und in denen Steckansätze der Kontaktfedern aufgenommen sind, und daß an die Steckansätze eine Federplatte angeschlossen ist, die im Winkel kleiner oder gleich 90° gegen die Seitenwand geneigt ist und seitlich der Anlagefläche für die Seitenwand die Kontaktspitzen hält.

Dieses erfindungsgemäße Vrrbindungselement besteht nur aus zwei Bauteilen die über die Steckansätze und die entsprechenden Steckaufnahmen einfach miteinander verbunden werden können.

Dadurch, daß die Kontaktspitzen abseits der Anlagefläche für die Seitenwand vorstehen, ist eine sichere Kontaktgabe gewährleistet. Beim Montieren graben sich die Kontaktspitzen in die Lackierung der Seitenwand ein und ermöglichen so die Kontaktgabe. Gleichzeitig wird die Kontaktfeder mit ihren Kontaktspitzen federvorgespannt gegen die Seitenwand gedrückt. Über diesen Anpreßdruck kann die sichere Kontaktgabe aufrecht erhalten werden.

Eine mögliche Erfindungsvariante sieht vor, daß die Kontaktfeder als U-förmiger Bügel ausgebildet ist, der zwei zueinander parallel beabstandete Schenkel aufweist, die die Steckansätze bilden und die über die Federplatte miteinander verbunden sind, wobei die Federplatte gegenüber den Steckansätzen abgewinkelt ist. Mit der Beabstandung der Schenkel wird eine Stützlänge geschaffen, die eine kippstabile Abstützung der Kontaktfeder ermöglicht.

Zur vereinfachten Montage ist es vorgesehen, daß die Einsetzbewegung der Kontaktfeder in den Halter mittels eines Anschlages begrenzt ist, so daß die Kontaktfeder stets in einer vorbestimmten Position montierbar ist. Weiterhin kann es dabei vorgesehen sein, daß die Steckansätze der Kontaktfeder in den Steckaufnahmen geklemmt gehalten sind. Der Halter und die Kontaktfeder können demnach vormontiert werden, so daß nur ein Bauelement bei der Montage der Seitenwand an dem Rahmenprofil befestigt werden muß. Zudem ermöglicht die spielfreie Einklemmung der Steckansätze stets eine sichere Kontaktgabe, ohne das hierzu besondere Vorkehrungen bei der Montage des Verbindungselements zu treffen sind.

Eine denkbare Erfindungsvariante sieht vor, daß die Befestigungsplatte mit einer Schraubaufnahme und einer Gewindeaufnahme versehen ist, die in Längsrichtung des Rahmenprofiles zueinander beabstandet angeordnet sind, und daß der Schenkel ebenfalls mit zwei Gewindeaufnahmen zur Befestigung der Seitenwand ausgestattet ist, welche zueinander in Längsrichtung des Rahmenprofiles

um das gleiche Maß wie die Schraubaufnahme und die Gewindeaufnahme der Befestigungsplatte beabstandet sind. Ein so ausgestattetes Verbindungselement kann über die Schraubaufnahme der Befestigungsplatte von der Außenseite des Rahmenprofiles her montiert werden. Es ist jedoch auch möglich, die Befestigungsplatte des Schaltschrankes her zu verschrauben. Hierzu wird eine Befestigungsschraube durch das Rahmenprofi,l hindurchgesteckt und in die Gewindeaufnahme der Befestigungsplatte eingeschraubt. Abhängig von der gewählten Befestigungsart kann wahlweise eine der beiden Gewindeaufnahmen des Schenkels zur Befestigung der Seitenwand verwendet werden.

Um eine ausreichende Federsteifigkeit für die Kontaktfeder sicher zu stellen, ist diese bevorzugt aus einem Federstahl gefertigt.

Die Erfindung wird im folgenden anhand eines in den Zeichnungen dargestellten Ausführungsbeispieles näher erläutert. Es zeigen:
- Fig. 1: in perspektivischer Explosionsdarstellung ein Rahmenprofil mit einem daran befestigten Verbindungselement und
- Fig. 2: die Darstellung gemäß Figur 1 mit montiertem Verbindungselement und einer Seitenwand.

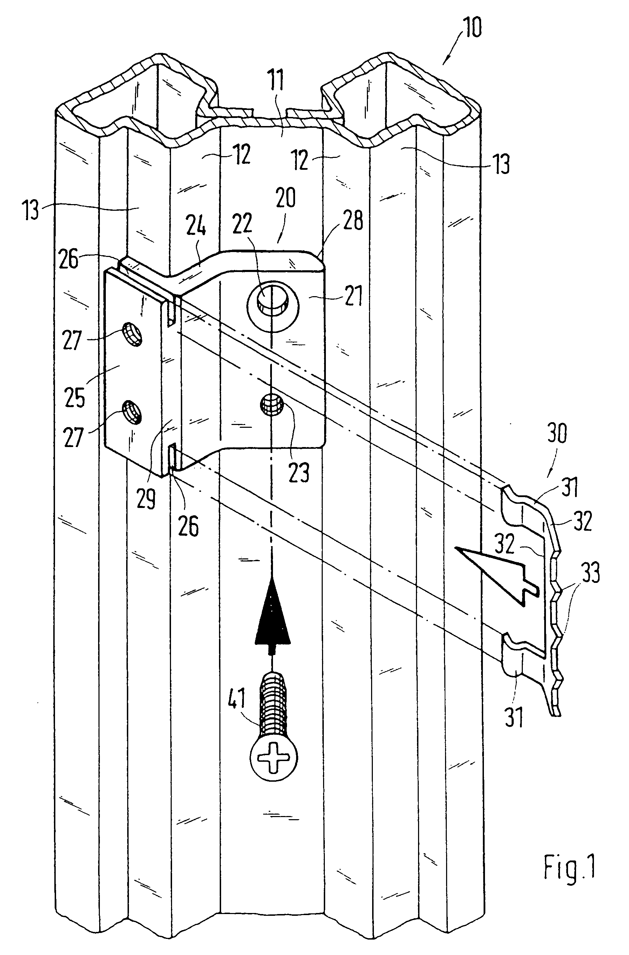

In der Fig. 1 ist ein vertikales Rahmenprofil 10 eines Rahmengestelles dargestellt. Derartige Rahmengestelle dienen bei einem Schaltschrank als Traggerüst.

Das Rahmenprofil 10 besitzt eine Außenwand 11 an die zwei Abwinklungen 12 angeschlossen sind. Die Abwinklungen 11 gehen rechtwinklig in Profilseiten 13 über. An der Außenwand 20 kann ein Verbindungselement angeschraubt wer-den. Das Verbindungselement besitzt einen Halter 20, der eine vertikal verlaufende Befestigungsplatte 21 aufweist. An die Befestigungsplatte 21 ist ein Übergangsabschnitt 24 angeschlossen. Von dem Übergangsabschnitt 24 wiederum ist ein Schenkel 25 abgewinkelt. Der Schenkel 25 steht dabei parallel zu der zugeordneten Außenseite des Rahmengestelles. Die Befestigungsplatte 21 ist mit einer Schraubaufnahme 22 und einer Gewindeaufnahme 23 versehen. Die Schraubaufnahme ist in Längsrichtung des Rahmenprofiles 10 beabstandet zu der Gewindeaufnahme 23 angeordnet.

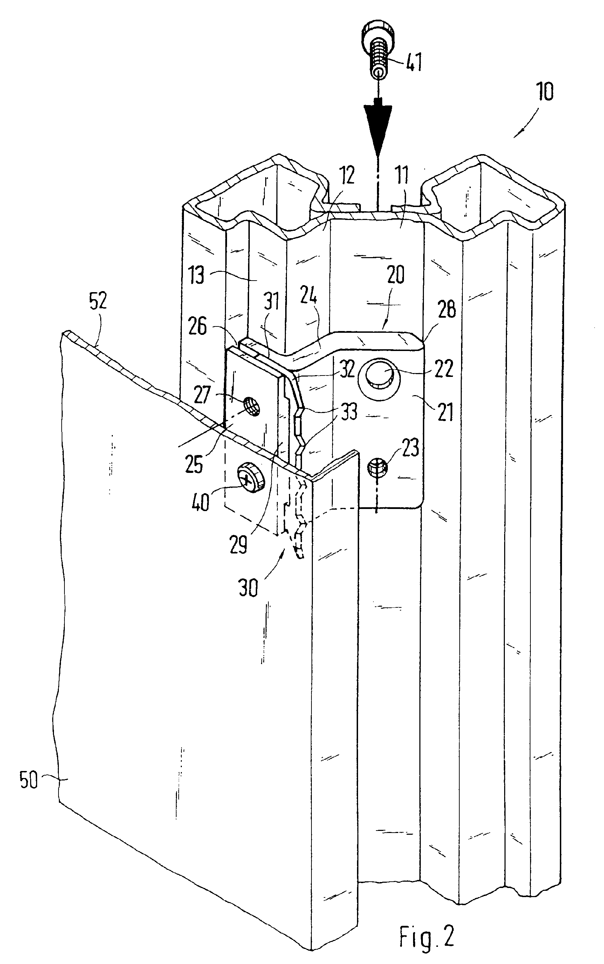

Zur Befestigung des Halters 20 an dem Rahmenprofil 10 wird eine Befestigungsschraube 41 verwendet. Diese läßt sich durch die Schraubaufnahme 22 hindurchführen und mit dem Rahmenprofil 10 verschrauben. Die Montage des Halters 20 kann auch von der Innenseite des Schaltschrankes her erfolgen, was näher in Fig. 2 dargestellt ist. Hier kann man erkennen, daß die Befestigungsschraube 41 rückseitig durch die Außenwand 11 hindurchgeschoben und in die Gewindeaufnahme 23 der Befestigungsplatte 21 eingeschraubt wird. Abhängig von den räumlichen Gegebenheiten kann entweder die Befestigungsvariante gemäß Fig. 1 oder 2 gewählt werden.

Um einen elektrischen Kontakt zwischen dem Rahmenprofil 10 und einer Seitenwand 50 (siehe beispielsweise Fig. 2) herstellen zu können, ist eine Kontakt-feder 30 verwendet. Die Kontaktfeder 30 ist U-förmig ausgebildet und weist zu-einander parallel beabstandete Steckansätze 31 auf. Die beiden Steckansätze 31 sind über eine Federplatte 32 miteinander verbunden. Dabei ist die Federplatte 32 gegenüber den Steckansätzen 31 abgebogen. Die Federplatte 32 trägt fünf Kontaktspitzen 33 die schräg gegen die jeweilige Außenseite des Schalt-schrankes gerichtet sind. Mit den Steckansätzen 31 kann die Kontaktfeder 30 in Steckaufnahmen 26 eingeführt werden. Die Steckaufnahmen 26 sind seitlich in den Schenkel 25 des Halters 20 eingebracht. Die Steckansätze 31 weisen gegenüber den Steckaufnahmen 26 ein leichtes Übermaß auf, so daß die Kontaktfeder 30 geklemmt an dem Schenkel 25 gehalten ist. Die Kontaktfeder 30 kann von beiden Seiten mit ihren Steckansätzen 31 in die Steckaufnahme 26 eingeschoben werden. Bevorzugt sind die Steckansätze 31 wellenförmig gebogen, so daß sie sich in den Steckaufnahmen 26 federelastisch verspannen können.

In der Fig. 2 ist der an das Rahmenprofil 10 montierte Halter 20 dargestellt. An dem Schenkel 25 ist eine Seitenwand 50 befestigt. Die Seitenwand 50 ist mit einem Durchbruch versehen, der fluchtend zu einer Gewindeaufnahme 27 im Schenkel 25 angeordnet ist. Durch den Durchbruch kann eine Befestigungsschraube 40 hindurchgesteckt und in die Gewindeaufnahme 27 eingeschraubt werden. Beim Anziehen der Befestigungsschraube 40 wird die Seitenwand 50 in Richtung auf die Kontaktspitzen 33 bewegt. Dabei treffen dann die Kontaktspitzen 33 auf die Innenfläche 52 der Seitenwand 50. Sie graben sich in die Lackierung der Seitenwand 50 ein und stellen so einen elektrischen Kontakt zu dem Halter 20 und damit zum Rahmenprofil 10 her. Im angeschraubten Zustand der Seitenwand ist die Kontaktfeder 30 mit ihren Kontaktspitzen 33 federvorgespannt an der Innenfläche 52 gehalten, so daß stets eine sichere Kontaktgabe gewährleistet ist.

Wie sich der Fig. 2 entnehmen läßt, sind in den Schenkel 25 zwei Gewindeaufnahmen 27 eingebracht, die in Längsrichtung des Rahmenprofiles 10 zueinander beabstandet angeordnet sind. Diese Beabstandung entspricht der Beabstandung der Gewindeaufnahme 23 in der Befestigungsplatte 21 zu der Schraubaufnahme 22. Abhängig von der gewählten Befestigungsart (Verschrauben von der Innen- oder Außenseite des Schaltschrankes) wird zur Befestigung der Seitenwand 50 die eine oder andere Gewindeaufnahme 27 im Schenkel 25 zur Hilfe genommen.

Die vorbeschriebene Ausführungsvariante eines Verbindungselementes eignet sich insbesondere für die sichere Abführung großer Kurzschlußströme. Wenn beispielsweise ein solcher Kurzschlußstrom über die Seitenwand 50 fließt, kann dieser über die Kontaktspitzen 33 in den Halter 20 und damit in das geerdete Rahmenprofil 10 abfließen. Bei sehr hohen Strömen kann es vorkommen, daß die Kontaktspitzen 33 abbrennen. Da sie jedoch federvorgespannt gegen die Innenfläche 52 der Seitenwand gepreßt sind, ist auch in diesem Betriebszustand eine sichere Kontaktgabe aufrechterhalten.

## Patentansprüche

1. Verbindungselement mit einem Halter zur Befestigung von Seitenwänden eines Schaltschrankes an Rahmenprofilen eines Schaltschrank-Rahmengestelles, wobei zur elektrischen Verbindung der Seitenwände mit den Rahmenschenkeln Kontaktfedern an dem Halter befestigt sind, die mit in Richtung zur Seitenwand weisenden Kontaktspitzen versehen sind, wobei die Kontaktspitzen über eine Anlagefläche des Rahmenprofiles, an der die jeweilige Seitewand anliegt, vorstehen,
**dadurch gekennzeichnet,**
**daß** der Halter (20) eine Befestigungsplatte (21) aufweist, die an einer Außenwand (11) des Rahmenprofiles (10) angeschraubt ist,
**daß** die Befestigungsplatte (21) in einen, vertikal zur Seitenwand (50) stehenden Befestigungsabschnitt übergeht, an den ein verlaufender Schenkel (25) parallel zur Seitewand (50) angeschlossen ist, der mit wenigstens einer Gewindeaufnahme (27) zur Festlegung der Seitenwand (50) ausgestattet ist,
**daß** der Schenkel (25) zwei Steckaufnahmen (26) aufweist, die zueinander in Längsrichtung des Rahmenprofiles (10) beabstandet angeordnet und in denen Steckansätze 131) der Kontaktfedern (30) aufgenommen sind, und daß an die Steckansätze (31) eine Federplatte (32) angeschlossen ist, die im Winkel kleiner oder gleich 90° gegen die Seitenwand (50) geneigt ist und seitlich der Anlagefläche für die Seitenwand (50) die Kontaktspitzen (33) hält.

2. Verbindungselement nach Anspruch 1 ,
**dadurch gekennzeichnet,**
**daß** die Kontaktfeder (30) als U-förmiger Bügel ausgebildet ist, der zwei zueinander parallel beabstandete Schenkel aufweist, die die Steckansätze (31) bilden und die über die Federplatte (32) miteinander verbunden sind,
wobei die Federplatte (32) gegenüber den Steckansätzen (31) abgewinkelt ist.

3. Verbindungselement nach Anspruch 1 oder 2,
**dadurch gekennzeichnet,**
**daß** die Einsetzbewegung der Kontaktfeder (30) in den Halter (20) mittels eines Anschlages (29) begrenzt ist, und
**daß** die Steckansätze (31) der Kontaktfeder (30) in den Steckaufnahmen (26) geklemmt gehalten sind.

4. Verbindungselement nach einem der Ansprüche 1 bis 3,
**dadurch gekennzeichnet,**
**daß** die Befestigungsplatte (21) mit einer Schraubaufnahme (22) und einer Gewindeaufnahme (23) versehen ist, die in Längsrichtung des Rahmenprofiles (10) zueinander beabstandet angeordnet sind, und
**daß** der Schenkel (25) ebenfalls mit zwei Gewindeaufnahmen (27) zur Befestigung der Seitenwand (50) ausgestattet ist, welche zueinander in Längsrichtung des Rahmenprofiles (10) um das gleiche Maß wie die Schraubaufnahme (22) und die Gewindeaufnahme (23) der Befestigungsplatte (21) beabstandet sind.

5. Verbindungselement nach einem der Ansprüche 1 bis 4,
**dadurch gekennzeichnet,**
**daß** die Kontaktfeder (30) aus einem Federstahl gefertigt ist.

## Claims

1. Connection element having a bracket for fastening side walls of a switchgear cabinet to frame profiles of a switchgear cabinet framework, with contact springs being fastened to the bracket for electrically connecting the side walls to the frame limbs, said contact springs being provided with contact tips which point in the direction of the side wall, with the contact tips projecting beyond a bearing face of the frame profile against which the respective side wall rests,
**characterized**
**in that** the bracket (20) has a fastening plate (21) which is screwed to an outer wall (11) of the frame profile (10),
**in that** the fastening plate (21) merges with a fastening section which stands vertical to the side wall (50), to which fastening section a running limb (25) is connected parallel to the side wall (50), which limb is equipped with at least one threaded receptacle (27) for securing the side wall (50),
**in that** the limb (25) has two plug-in receptacles (26) which are arranged at a distance from one another in the longitudinal direction of the frame profile (10) and in which plug-in projections (31) of the contact springs (30) are accommodated, and
**in that** a spring plate (32) is connected to the plug-in projections (31), said spring plate being inclined at an angle of less than or equal to 90° with respect to the side wall (50) and holding the contact tips (33) on the side of the bearing surface for the side wall (50).

2. Connection element according to Claim 1, **characterized in that** the contact spring (30) is in the form of a U-shaped clip which has two limbs which are spaced apart parallel from one another, said limbs forming the plug-in projections (31) and being connected to one another via the spring plate (32), with the spring plate (32) being angled in relation to the plug-in projections (31).

3. Connection element according to Claim 1 or 2,
**characterized in that**
the insertion movement of the contact spring (30) into the bracket (20) is limited by means of a stop (29), and
**in that** the plug-in projections (31) of the contact spring (30) are held clamped in the plug-in receptacles (26).

4. Connection element according to one of Claims 1 to 3,
**characterized**
**in that** the fastening plate (21) is provided with a screw receptacle (22) and a threaded receptacle (23), which receptacles are arranged spaced apart from one another in the longitudinal direction of the frame profile (10), and
**in that** the limb (25) is likewise equipped with two threaded receptacles (27) for fastening the side wall (50), which threaded receptacles are spaced apart from one another in the longitudinal direction of the frame profile (10) by the same extent as the screw receptacle (22) and the threaded receptacle (23) of the fastening plate (21).

5. Connection element according to one of Claims 1 to 4,
**characterized**
**in that** the contact spring (30) is produced from spring steel.

## Revendications

1. Elément d'assemblage comprenant un élément de retenue pour la fixation de parois latérales d'une armoire de distribution sur des profilés de cadre d'un bâti de cadre d'armoire de distribution, des ressorts de contact étant fixés sur l'élément de retenue pour la connexion électrique des parois latérales aux branches du cadre et étant pourvus de pointes de contact tournées dans la direction de la paroi latérale, les pointes de contact dépassant au-delà d'une surface d'appui du profilé de cadre contre laquelle s'applique la paroi latérale respective,
**caractérisé en ce que**
l'élément de retenue (20) présente une plaque de fixation (21) qui est vissée à une paroi extérieure (11) du profilé de cadre (10),
**en ce que** la plaque de fixation (21) se prolonge par une portion de fixation disposée verticalement par rapport à la paroi latérale (50), à laquelle est raccordée une branche (25) s'étendant parallèlement à la paroi latérale (50), qui est munie d'au moins un logement fileté (27) pour la fixation de la paroi latérale (50),
**en ce que** la branche (25) présente deux logements d'enfichage (26) qui sont disposés à l'écart l'un de l'autre dans la direction longitudinale du profilé de cadre (10) et dans lesquels sont reçus des inserts d'enfichage (31) des ressorts de contact (30), et **en ce qu'**une plaque de ressort (32) est raccordée aux inserts d'enfichage (31), laquelle est inclinée d'un angle inférieur ou égal à 90° vers la paroi latérale (50) et retient les pointes de contact (33) latéralement à la surface d'appui pour la paroi latérale (50).

2. Elément d'assemblage selon la revendication 1,
**caractérisé en ce que**
le ressort de contact (30) est réalisé sous forme d'arceau en forme de U, qui présente deux branches espacées parallèlement l'une à l'autre, qui forment les inserts d'enfichage (31) et qui sont connectées l'une à l'autre par le biais de la plaque de ressort (32), la plaque de ressort (32) étant coudée par rapport aux inserts d'enfichage (31).

3. Elément d'assemblage selon la revendication 1 ou 2,
**caractérisé en ce que**
le mouvement d'insertion du ressort de contact (30) dans l'élément de retenue (20) est limité au moyen d'une butée (29), et
**en ce que** les inserts d'enfichage (31) du ressort de contact (30) sont maintenus serrés dans les logements d'enfichage (26).

4. Elément d'assemblage selon l'une quelconque des revendications 1 à 3,
**caractérisé en ce que**
la plaque de fixation (21) est pourvue d'un logement de vis (22) et d'un logement fileté (23), qui sont disposés à distance l'un de l'autre dans la direction longitudinale du profilé de cadre (10), et
**en ce que** la branche (25) est également munie de deux logements filetés (27) pour la fixation de la paroi latérale (50), lesquels sont espacés l'un de l'autre dans la direction longitudinale du profilé de cadre (10) de la même distance que le logement de vis (22) et le logement fileté (23) de la plaque de fixation (21).

5. Elément d'assemblage selon l'une quelconque des revendications 1 à 4,
**caractérisé en ce que**
le ressort de contact (30) est fabriqué en acier à ressort.
